(19)

Europäisches
Patentamt
European
Patent Office
Office européen
des brevets

(11) **EP 1 894 901 A1**

(12) **EUROPEAN PATENT APPLICATION**

(43) Date of publication:
**05.03.2008 Bulletin 2008/10**

(21) Application number: **06119991.5**

(22) Date of filing: **01.09.2006**

(51) Int Cl.:
*C03C 17/00* (2006.01)    *C03C 17/245* (2006.01)
*C03C 17/34* (2006.01)    *B32B 17/10* (2006.01)
*H05B 3/84* (2006.01)    *A47G 1/02* (2006.01)
*B60R 1/06* (2006.01)    *G02B 5/08* (2006.01)
*G02B 7/18* (2006.01)

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicant: **AGC Flat Glass Europe SA
1170 Bruxelles (BE)**

(72) Inventor: **Frison Philippe
GLAVERBEL - Centre R&D
6040 Jumet (BE)**

(74) Representative: **Decamps, Alain René François et
al
AGC Flat Glass Europe SA
Intellectual Property Department
R&D Centre
rue de l'Aurore, 2
6040 Jumet (BE)**

(54) **Decorative and functional pane**

(57)    Decorative and functional pane comprising a glass sheet coated on one of its faces by a decorative coloured lacquer, characterised in that the pane comprises additional functional means able to modify its thermal properties. Functions of the pane are provided by either one of a heating layer that is a transparent electrically conductive layer and a passive insulating panel, possibly combined.

**40 x40 cm lacquered glass heating**

Fig 1

Printed by Jouve, 75001 PARIS (FR)

EP 1 894 901 A1

**Description**

This invention relates to a decorative and functional pane and, especially, to a pane that exhibits special thermal properties.

Decorative panes made of one or more sheets of glass are known for long. For example, enamelled or painted glass are used as spandrels or wall coverings outside or inside buildings as well as a lot of clear or coloured sheets of glass are now found as integral part of modern furniture.

However, there has been a need for special glasses in certain situations, which are able to exhibit in addition of their decorative properties, some additional functions like thermal functions which would be directly performed by the decorative glass, without requesting the separate addition of the traditional thermal device which supplies the sought function. Some properties like thermal insulation and/or heat generation have particularly been researched.

Fulfilling this need, the invention provides a decorative and functional pane comprising at least one glass sheet coated on one of its faces by a decorative coloured lacquer, characterised in that the pane comprises additional functional means able to modify its thermal properties.

According to a first aspect, the invention provides a decorative pane comprising a lacquered glass sheet having as well heating means, in particular electrical heating means, which are transparent to visible light radiations, as defined in Claim 6.

According to a second aspect, the invention provides comprising a lacquered glass sheet having as well thermal insulating means, especially passive heat insulation means, as defined in Claim 20.

According to a third aspect, the invention provides a decorative pane, which has both the heating and insulating means, combined, as defined in Claim 24.

Dependent claims define further preferred embodiments of the invention.

The present invention may provide one or more of the following advantages:

- simpler and cheaper structure than with already known decorative panes with traditional added thermal functional devices;

- lower voltage and electric power requirements for achieving the same heating effect;

- safe behaviour, as with isolated conductive elements.

The decorative and functional pane according to the invention comprises at least one sheet of glass. In particular, there is preferred that the glass is of the type called soda-lime glas. By soda-lime glass sheet, it is meant a glass sheet of from 0.5 to 15.0 mm thick having the following composition, expressed in percentages by weight:

$SiO_2$ 60 to 75%,

$Na_2O$ 10 to 20%,

CaO 0 to 16%,

$K_2O$ 0 to 10%,

MgO 0 to 10%,

$Al_2O_3$ 0 to 5%,

BaO 0 to 2%, with both further conditions:

alkaline-earth oxides (BaO + CaO + MgO) totalising from 10 to 20%,

alkaline oxides ($Na_2O$ + $K_2O$) totalising from 10 to 20%.

Minor additives may as well be present in very small proportions in the glass, like colourants ($Fe_2O_3$, FeO, CoO, $Nd_2O_3$, ...), redox components ($NaNO_3$, $Na_2SO_4$, coke, ...) and the like.

Preferably, clear soda-lime glass sheets that are used for the pane according to the invention exhibits a transmission coefficient Tv of visible light, measured under standard illuminant D65 (normalised by the C.I.E. "Commission Internationale de l'Eclairage" for representing an average daylight), observed within a 10° solid angle and for a glass thickness of 4 mm, of from 89.0 to 91.0 %. More preferably, that clear glass sheet exhibits a neutral colour in transmission of light. Most preferable is the clear glass sheet that exhibits the following colour properties in light transmission, when measured under standard illuminant D65, observed within a 10° solid angle and for a glass thickness of 4 mm:

- $94.0 < L^* < 95.0$,
- $-1.5 < a^* < -0.3$,
- $0.0 < b^* < 0.5$.

Colour is expressed here by means of the standard $L^*$, $a^*$, $b^*$ system of the C.I.E.

Alternatively, the soda-lime glass of the pane may as well be bulk coloured. Any visible colour may be used, depending of the nature of the colorants present in the glass composition. Generally, when bulk coloured, the soda-lime glass of the pane shows a light transmission $L^*$ of at least 40 % under the same illuminant and for the same 4 mm thickness. Preferably, the light transmission $L^*$ of the soda-lime glass, when bulk coloured is at least 55 % in the same conditions.

According to the invention, at least one sheet of glass of the decorative and functional pane is coated on one of its faces by a decorative coloured lacquer. By decorative coloured lacquer, it is intended as well paints and coloured enamels, especially paints of the cross-linking type. Such paints have the advantage to form hardened layers on the glass surface after drying.

Paints that are suitable for the pane according to the invention may have various organic base resins, like polyurethane, silicone, alkyd, polyester, phenol, amino, epoxy, acrylic, methacrylic, acryl-styrene and acrylamide resins in association with organic and/or mineral pigments. Suitable enamels comprise as well mineral pigments associated with a more fusible glass composition than the glass sheet.

According to a first aspect of the invention, a decorative pane is provided, comprising a lacquered glass sheet having as well heating means, in particular electrical heating means, which are transparent to visible light radiations. The temperature of the pane surface that is in contact with the surrounding atmosphere can be elevated at will by those means of from 5 to 40 °C over the ambient temperature by applying a suitable voltage across opposite borders of the pane surface.

In this aspect, an electrically conductive layer that is transparent to the visible light radiations is coated on at least one surface of a glass sheet of the pane. In a first embodiment, the surface of the glass sheet coated with the electrically conductive layer is different from the glass surface coated with the lacquer.

Alternatively, in a second embodiment, the lacquer may also be coated on the same surface of the glass sheet as an electrically conductive layer that is transparent to the visible light radiations, on top of that conductive layer.

In a third preferred embodiment of the pane of the invention, the electrically conductive layer is a is a hard chemically and mechanically resistant layer like a pyrolitic layer which has been deposited on the glass surface at temperatures of from 500 to 750 °C. Preferably, the conductive layer has been deposited at temperatures of from 570 to 660 °C. That type of layer can be deposited directly on the hot glass ribbon, at the leave of the process section where the molten glass floats upon a tin bath in a so-called "float glass" well known process making of glass. Advantageously, the pyrolitic layer is a chemical vapour deposited (CVD) layer.

Generally, the nature of that pyrolitic layer is essentially of $SnO_2$ doped with F and/or Sb. A pyrolitic layer consisting essentially of $SnO_2$ doped with F has given excellent results. Thickness of that pyrolitic layer has to be carefully adapted in order to deliver a suitable surface resistivity. Thickness of the pyrolitic layer should advantageously be from 250 to 500 nm. A thickness of about 300 nm has given excellent results.

In a fourth preferred embodiment, the pane has a front face with a very low haze. Diffuse reflectivity of a pane surface is generally taken as a measure of its haze. A pane that exhibits a diffuse reflective coefficient Rvd of from 0.1 to 1.5 % is preferred. Most preferred is the pane that exhibits a diffuse reflective coefficient Rvd of 0.1 to 0.6 %. That diffuse reflective coefficient should be measured with a spectrophotometer equipped with a white integrating sphere. A Perkin-Elmer® 900 spectrophotometer has given excellent results. The pane front face of which haze is to be measured is applied tangentially on the sphere so as to shut a small aperture in the sphere surface. An incident beam of monochromatic light delivered by the monochromator device of the spectrophotometer is targeted towards that sample, at a small angle from the perpendicular to its surface. An opposite aperture in the sphere located in the direction of the opposite angle past the perpendicular allows the escape of the direct specular reflected light beam leaving the pane sample surface, the sphere trapping every diffuse light beam reflected in whatever other direction. A light captor cell located elsewhere on the sphere surface measures the total diffused monochromatic light summed by the sphere within a 10° solid observation angle. The diffuse reflective coefficient Rvd is then computed by integrating all measured total diffused monochromatic lights over the visible spectrum wavelength range, as follows:

$$Rvd = \frac{\sum\limits_{\lambda=380}^{780\,nm} Rvd(\lambda) * V(\lambda) * D65(\lambda)}{\sum\limits_{\lambda=380}^{780\,nm} V(\lambda) * D65(\lambda)}$$

wherein,

$Rvd(\lambda)$ is the spectral total diffuse light,

$V(\lambda)$ is the spectral luminous efficiency of an average human eye

and $D65(\lambda)$ is the relative spectral distribution of illuminant D65.

In a fifth preferred embodiment, the electrically conductive layer of the pane has a total surface roughness of from 20 to 40 nm and, preferably, of from 20.0 to 30.0 nm. By total surface roughness ($R_t$) it is meant the sum of the greatest height of the protrusions ($R_{prot}$) and the greatest depth of the pits ($R_{pit}$) measured with an atomic force microscope. The latter is delivering individual heights $h_{ij}$ for each point of the surface according to 2 perpendicular directions i and j. $R_t$ can be computed as follows:

$$R_t = R_{prot} + R_{pit}$$

wherein:

$$R_{prot} = \left| \max_{i,j}\{h_{ij} - h_{moy}\} \right|$$

$$R_{pit} = \left| \min_{i,j}\{h_{ij} - h_{moy}\} \right|$$

$$h_{moy} = \frac{1}{N} \sum_i \sum_j h_{ij}$$

N being the number of measures.

Any method can be used to achieve said surface roughness, indifferently. Good results have been obtained with a float glass coated with an electrically conductive layer that has been mechanically polished with abrasives for a certain time up to the obtainment of the corrected surface roughness.

In a sixth preferred embodiment, the electrically conductive layer of the pane has a surface electrical resistivity of from 1 to 50Ω/□. Preferably, the surface electrical resistivity of the electrically conductive layer should be of from 5 to 20 Ω/□. Most preferred is an electrically conductive layer having a surface electrical resistivity of from 9 to 19 Ω/□.

In an seventh embodiment of the invention, an undercoat layer may be interposed between the electrically conductive layer and the glass surface. That interposed layer may as well be deposited on the glass surface by a pyrolitic coating process.

All seven embodiments described above may be combined, at least by pairs of any two of them. Even combined all seven together, the resulting pane is still enabling.

Panes according to the invention are well suited as, for example, heating panes for bathroom or kitchen furniture, especially used for decorative drying towel racks, as well as decorative room or office radiators.

In a second aspect, the invention provides a decorative and functional pane comprising a lacquered glass sheet having as well passive heat insulation means, which cover uniformly its lacquered face.

By passive heat insulation means, it is meant permanent insulating means like solid materials having a low heat transfer coefficient. All kind of nonreactive materials generally used in building for their insulation properties can be used in the pane according to the invention. Rigid materials able to form rigid panels are preferred, especially the insulation panes able to be fixed with a lacquered glass surface like, for example, panels formed from rigid polyvinyl chloride, expanded polystyrene, plaster, wood, plywood, rock wool panel, fibre glass and foam glass. All types of mechanical or chemical fixings are possible like, for example, nails, screws, bolts, tightening devices of all kinds, glues and welds. Glues compatible with the lacquer composition is generally preferred.

According to this aspect, panes of a huge range of different dimensions are provided. Especially advantageous are the prefabricated panes of large dimensions that can be cut to proper size at will on works site in order to fit every building requirement. The panes according to the invention are particularly suited to prefabricated panes of very large sizes, like those having the full width of a float glass and various lengths: 3.21 m x 2.5 m and up to 3.21 m x 6.0 m. Decorative and insulating panes according to this aspect are well suited to the realization of decorative and easy cleaned wall coverings.

According to this aspect of the invention, an embodiment of the decorative and insulating pane comprises two glass sheets both coated on one of their faces by a decorative coloured lacquer, the coatings of both sheets disposed facing each other, a single passive heat insulation means being interposed between the two coated sheets. In this embodiment, the lacquer coatings of both glass sheets can be different, for example of a different colour or type of paint.

Panes according to that embodiment are particularly advantageous for making decorative partition walls that require very few maintenance.

In a third aspect, the invention provides a decorative and functional pane that has both heating and insulating means. In this aspect, all embodiments detailed above may be combined, at least by pairs of any two of them.

In that aspect, it is provided decorative heating panes that limit the heat flow in one direction perpendicular to the pane. Such panes are especially advantageous for realizing prefabricated panes aimed at the covering a wall located at the inside of a building outer wall. In that aspect, it is preferred that the insulating panel is located on the wall side, on top of the lacquer covering the electrically conductive layer coating directly deposited on the glass sheet surface. For small and mi-sized panes, it is further interesting to associate two panes sandwiching a single insulating panel. In the latter case, one may as well put the electrically conductive layer on the other side of the glass in contact with the surrounding atmosphere, so realizing a structured pane:

heating layer – glass – lacquer – insulating panel – lacquer – glass – heating layer

In any of the three aspects of the invention, an outer glass surface of the pane different from the lacquered surface may as well be sanded or etched in order to exhibit a matted, soft-touch feel. Alternatively, the lacquer may also be coated on a glass surface that is sanded or etched. In both situations, the sanded or etched surface is most often different from the one coated with the electrically conductive layer.

In another embodiment, compatible with any of the three aspects and their own respective embodiments, at least one sheet of transparent plastic may be laminated between two adjacent glass sheets of the pane. In that embodiment, the decorative and functional pane comprises at least two sheets of glass sandwiching a sheet of plastic. The plastic may be selected from polyesters, for example polyvinyl butyral, ethylene and vinyl acetate copolymers and polyethylene terephtalates. Polyvinyl butyral is generally preferred. The plastic needs not be transparent to visible light and may comprise any opaque filler material in every case it is hidden from a user view because it is located behind a lacquered glass face. Alternatively, in case it is visible, being located between the user view and the coloured lacquer, the plastic sheet may be itself coloured as well, allowing complex colours and visual effects to take place together with the lacquer.

Panes according to the invention will now be described in details in the following example illustrating the invention, without seeking to limit the same.

Example:

A 4 mm thick piece of glass coated with a pyrolitic electrically conductive layer (surface resistivity of 11 Ω/□) has been cut to a 40 x 40 cm dimension square sample and has been subsequently painted on the back side with the same acrylic lacquer used for LACOBEL® Cherry Red commercial glass.

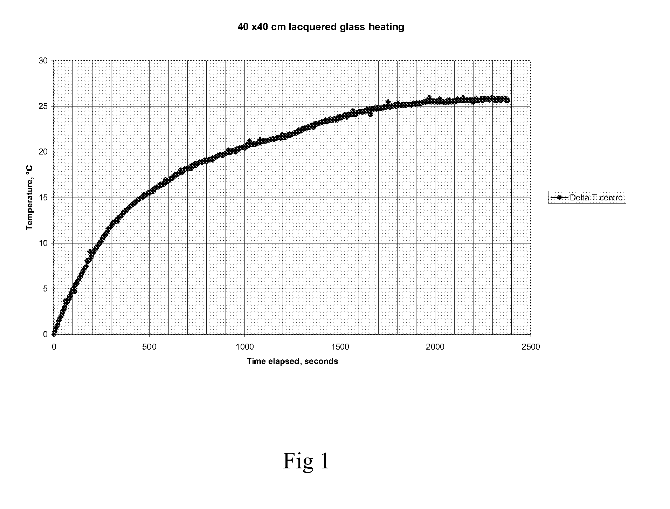

Copper bus bars have been connected to two opposite border of the square and a DC voltage of 30 V has been applied between bus bars. The recording of the temperature rise over the atmospheric temperature (around 21 °C, non-turbulent conditions, initial temperature in equilibrium with the atmosphere) in the center of the square surface measured on the painted side has been plotted on the graph of figure 1.

It can be seen that steady-state temperature conditions were reached after about 30 minutes of heating time, at a surface temperature of about 26 °C over the ambient temperature. The curve obtained is comparable to the ones recorded with non-lacquered glasses, indicating that the paint layer does not interfere with the heating process.

After weathering the square for 20 days in wet conditions (according to DIN 50017 standard: 40 °C, 98 % Relative Humidity) no modification of the heating properties were observed and no blistering occurred on the lacquer coating.

## Claims

1.  Decorative and functional pane comprising at least one glass sheet coated on one of its faces by a decorative coloured lacquer, **characterised in that** the pane comprises additional functional means able to modify its thermal properties.

2.  Pane according to claim 1, wherein the lacquer is selected from cross-linking paints and coloured enamels.

3.  Pane according to claim 1 or 2, **characterised in that** the glass sheet exhibits a light transmission coefficient Tv, measured under standard illuminant D65, observed within a 10° solid angle and for a glass thickness of 4 mm of from 89.0 to 91.0 %.

4.  Pane according to any one of claims 1 to 3, **characterised in that** the glass sheet exhibits a neutral colour in transmission of light.

5.  Pane according to claim 4, **characterised in that** the glass sheet exhibits the following colour properties in light transmission, when measured under standard illuminant D65, observed within a 10° solid angle and for a glass thickness of 4 mm:

    - $94.0 < L^* < 95.0$,
    - $-1.5 < a^* < -0.3$,
    - $0.0 < b^* < 0.5$.

6.  Pane according to any one of claims 1 to 5, **characterised in that** it has visible light transparent electrical heating means, by which the temperature of a pane surface that is in contact with the surrounding atmosphere can be elevated at will of from 5 to 40 °C over the ambient temperature by applying a voltage across opposite borders of the surface.

7.  Pane according to claim 6, **characterised in that** an electrically conductive layer that is transparent to the visible light radiations is coated on at least one surface of a glass sheet which is different from the glass sheet surface coated with the lacquer.

8.  Pane according to claim 6, **characterised in that** the lacquer is coated on the same surface of the glass sheet as an electrically conductive layer that is transparent to the visible light radiations, on top of that conductive layer.

9.  Pane according to any one of claims 1 to 8, **characterised in that** the electrically conductive layer is a hard chemically and mechanically resistant layer.

10. Pane according to claim 9, **characterised in that** the hard electrically conductive layer is a pyrolitic layer deposited on the glass surface at temperatures of from 500 to 750 °C.

11. Pane according to claim 10, **characterised in that** the hard electrically conductive layer is a chemical vapour deposited (CVD) layer.

12. Pane according to claim 11, **characterised in that** the hard electrically conductive layer consists essentially of a $SnO_2$ layer doped with F and/or Sb.

13. Pane according to any one of claims 9 to 12, **characterised in that** the electrically conductive layer has a thickness of from 250 to 500 nm.

**14.** Pane according to any one of claims 1 to 13, **characterised in that** it has diffuse reflective coefficient (Rvd) observed under a D65 illuminant within a 10° solid angle of from 0.1 to 1.5 %.

**15.** Pane according to any one of claims 1 to 14, **characterised in that** the electrically conductive layer has a total surface roughness of from 20 to 40 nm.

**16.** Pane according to any one of claims 1 to 15, **characterised in that** the electrically conductive layer has a surface electrical resistivity of from 1 to 20 $\Omega/\square$.

**17.** Pane according to any one of claims 1 to 16, **characterised in that** the electrically conductive layer has a surface electrical resistivity of from 9 to 19$\Omega/\square$.

**18.** Pane according to any one of claims 1 to 17, **characterised in that** an undercoat layer is interposed between the electrically conductive layer and the glass surface.

**19.** Pane according to any one of claims 1 to 18, **characterised in that** the electrically conductive layer is mechanically polished.

**20.** Pane according to any one of claims 1 to 5, **characterised in that** it has passive heat insulation means, which cover uniformly its lacquered face.

**21.** Pane according to claim 20, **characterised in that** a rigid panel having a low heat transfer coefficient is fixed on top of the lacquered face of the pane.

**22.** Pane according to claim 21, **characterised in that** it is a prefabricated pane having a rectangular shape and sizes up to 3.21 m x 6.0 m.

**23.** Pane according to claim 21 or 22, **characterised in that** it comprises two glass sheets both coated on one of their faces by a decorative coloured lacquer, the coatings of both sheets disposed facing each other, a single passive heat insulation means being interposed between the two coated sheets.

**24.** Pane according to any one of claims 1 to 23, **characterised in that** it has both heating and insulating means.

**25.** Pane according to any one of claims 1 to 24, **characterised in that** an outer glass surface of the pane different from the lacquered surface is sanded or etched and exhibits a soft-touch feel.

**26.** Pane according to any one of claims 1 to 24, **characterised in that** the lacquer is coated on a glass surface that is sanded or etched.

**27.** Pane according to claim 25 or 26, **characterised in that** the sanded or etched surface is different from the one coated with the electrically conductive layer.

**28.** Pane according to any one of claims 1 to 27, **characterised in that** at least one sheet of transparent plastic is laminated between two adjacent glass sheets of the pane.

**40 x40 cm lacquered glass heating**

Fig 1

European Patent
Office

**EUROPEAN SEARCH REPORT**

Application Number

EP 06 11 9991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2006/092402 A (GLAVERBEL [BE]; JARDINET ALAIN [BE]; LEFEVRE HUGUES [BE]; SCARSO FLORE) 8 September 2006 (2006-09-08) * claims; examples 1,2 * | 1-3,5,7, 9-19 | INV.<br>C03C17/00<br>C03C17/245<br>C03C17/34<br>B32B17/10 |
| X | FR 2 583 176 A (METAGAL IND COMERCIO LTDA [BR]) 12 December 1986 (1986-12-12) * page 3, line 1 - page 5, line 19 * * claims 1,6-9 * | 1,2,6,7 | H05B3/84<br><br>ADD.<br>A47G1/02 |
| X | US 5 786 289 A (HARMAND HELENE [FR] ET AL) 28 July 1998 (1998-07-28) | 1,2,6,7, 9-12,28 | B60R1/06<br>G02B5/08 |
| A | * column 6, line 8 - column 8, line 57 * | 20-23 | G02B7/18 |
| X | JP 60 019103 A (NIPPON SOKEN) 31 January 1985 (1985-01-31) * abstract * | 1,2,6-9, 11 | |
| X | US 6 602 340 B1 (SCHANK CHRISTINA [DE] ET AL) 5 August 2003 (2003-08-05) * claims * | 1,2 | |
| A | EP 0 662 459 A (PILKINGTON GLASS LTD [GB]) 12 July 1995 (1995-07-12) * page 7, line 33 - page 9, line 21; claims; figures 1,2 * | 1,2,7,8 | TECHNICAL FIELDS SEARCHED (IPC)<br>H05B<br>C03C<br>B32B<br>B60R |
| A | EP 0 578 829 A1 (SHISEIDO CO LTD [JP]; FIGLA CO LTD [JP]) 19 January 1994 (1994-01-19) * page 3, line 3 - page 5, line 36 * * page 9, line 50 - page 10, line 2; claims; figures * | 1,20 | G02B<br>E04F |
| A | JP 05 193992 A (SAKAKI SHOJI) 3 August 1993 (1993-08-03) * abstract * | 1,20 | |

-/--

The present search report has been drawn up for all claims

| Place of search | Date of completion of the search | Examiner |
|---|---|---|
| Munich | 2 February 2007 | Lindner, Thomas |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 06 11 9991

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 218 323 B1 (BRETSCHNEIDER JOACHIM [DE] ET AL) 17 April 2001 (2001-04-17) * column 4, line 1 - line 40; claims * ----- | 3,5 | |
| A | EP 1 281 687 A1 (NIPPON SHEET GLASS CO LTD [JP]) 5 February 2003 (2003-02-05) * page 5, line 54 - line 57 * * tables * ----- | 3,5 | |

| | TECHNICAL FIELDS SEARCHED (IPC) |
|---|---|
| | |

The present search report has been drawn up for all claims

| Place of search | Date of completion of the search | Examiner |
|---|---|---|
| Munich | 2 February 2007 | Lindner, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 11 9991

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2007

| Patent document cited in search report | | Publication date | Patent family member(s) | | Publication date |
|---|---|---|---|---|---|
| WO 2006092402 | A | 08-09-2006 | NONE | | |
| FR 2583176 | A | 12-12-1986 | BR | 8502319 A | 23-12-1986 |
| | | | DE | 3615949 A1 | 13-11-1986 |
| | | | IT | 1188147 B | 30-12-1987 |
| | | | JP | 62031541 A | 10-02-1987 |
| US 5786289 | A | 28-07-1998 | US | 5418025 A | 23-05-1995 |
| JP 60019103 | A | 31-01-1985 | NONE | | |
| US 6602340 | B1 | 05-08-2003 | AT | 239676 T | 15-05-2003 |
| | | | BR | 9813654 A | 03-10-2000 |
| | | | CN | 1282308 A | 31-01-2001 |
| | | | DE | 19856171 A1 | 24-06-1999 |
| | | | DE | 19881907 D2 | 15-06-2000 |
| | | | WO | 9931023 A1 | 24-06-1999 |
| | | | EP | 1044174 A1 | 18-10-2000 |
| | | | JP | 2002508497 T | 19-03-2002 |
| | | | TW | 546353 B | 11-08-2003 |
| EP 0662459 | A | 12-07-1995 | AU | 695950 B2 | 27-08-1998 |
| | | | AU | 1006895 A | 20-07-1995 |
| | | | AU | 1388895 A | 01-08-1995 |
| | | | BR | 9505766 A | 27-02-1996 |
| | | | CA | 2139834 A1 | 11-07-1995 |
| | | | CN | 1122127 A | 08-05-1996 |
| | | | CZ | 9500043 A3 | 16-08-1995 |
| | | | WO | 9518774 A1 | 13-07-1995 |
| | | | GB | 2290491 A | 03-01-1996 |
| | | | JP | 8508005 T | 27-08-1996 |
| | | | PL | 310471 A1 | 11-12-1995 |
| | | | ZA | 9500118 A | 07-02-1996 |
| EP 0578829 | A1 | 19-01-1994 | AT | 225709 T | 15-10-2002 |
| | | | DE | 69332364 D1 | 14-11-2002 |
| | | | WO | 9313939 A1 | 22-07-1993 |
| | | | JP | 3573429 B2 | 06-10-2004 |
| JP 5193992 | A | 03-08-1993 | NONE | | |
| US 6218323 | B1 | 17-04-2001 | DE | 29819347 U1 | 27-01-2000 |
| | | | JP | 2000143283 A | 23-05-2000 |
| EP 1281687 | A1 | 05-02-2003 | CN | 1427805 A | 02-07-2003 |
| | | | WO | 0166477 A1 | 13-09-2001 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 06 11 9991

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2007

| Patent document cited in search report | Publication date | Patent family member(s) | Publication date |
|---|---|---|---|
| EP 1281687 A1 | | US 2003114291 A1 | 19-06-2003 |

EPO FORM P0459

For more details about this annex : see Official Journal of the European Patent Office, No. 12/82